# EUROPÄISCHE PATENTSCHRIFT

(11) **EP 2 610 647 B1**
(45) Veröffentlichungstag und Bekanntmachung des Hinweises auf die Patenterteilung: **29.07.2015**
(21) Anmeldenummer: 11195755.1
(22) Anmeldetag: 27.12.2011
(51) Int. Cl.: G01V 8/10

(54) **Optoelektronischer Sensor**
Optoelectronic sensor
Capteur optoélectronique

(43) Veröffentlichungstag der Anmeldung: 03.07.2013
(73) Patentinhaber: Sick AG, 79183 Waldkirch (DE)
(72) Erfinder: Kammer, Hans-Jürgen, 79183 Waldkirch (DE)
(74) Vertreter: Hehl, Ulrich

(56) Entgegenhaltungen:
- EP-A1- 2 103 962
- EP-A1- 2 230 538
- WO-A1-95/10057
- DE-A1- 10 027 301
- US-A1- 2009 016 735

## Beschreibung

Die Erfindung betrifft einen optoelektronischen Sensor mit einem auf den ausgesandten Lichtstrahl aufmodulierten Sendesignal sowie ein Verfahren zur optischen Erfassung nach dem Oberbegriff von Anspruch 1 beziehungsweise 15.

Herkömmliche Lichtschranken arbeiten nach dem Prinzip, einen Lichtstrahl auszusenden, in einem Lichtempfänger zu registrieren und zu bewerten, ob das Empfangssignal eine Schaltschwelle überschreitet oder nicht. Bekannt sind Lichtschranken, die als Einweglichtschranken einen Sender und einen gegenüberliegenden Empfänger aufweisen, zwischen denen der Überwachungsbereich aufgespannt ist, oder die als Reflexionslichtschranken den Sender und Empfänger auf einen Reflektor ausrichten, so dass ein doppelter Lichtweg entsteht. Bei einem Lichtgitter werden effektiv mehrere dieser einstrahligen Sensoren parallel zueinander zusammengefügt, wobei dann natürlich Teile der Schaltelektronik von mehreren Strahlen gemeinsam genutzt werden können.

Sowohl für einstrahlige wie für mehrstrahlige Systeme ist auch das tastende Detektionsprinzip bekannt, bei dem der Sendelichtstrahl ins Freie ausgesandt wird und der an einem Objekt remittierte oder reflektierte Lichtstrahl dann in einem neben dem Lichtsender angeordneten Empfänger registriert wird. Wird ein solcher Lichttaster in eine Drehbewegung versetzt oder dessen Lichtstrahl über einen Drehspiegel periodisch abgelenkt, so entsteht ein Scanner.

Ein wichtiges Anwendungsgebiet derartiger optoelektronischer Sensoren ist die Sicherheitstechnik. Dabei wird der Zugang zu einer Gefahrenquelle, beispielsweise eine gefährliche Maschine von dem Sensor überwacht, der bei unzulässigem Eingriff in das von den Strahlen aufgespannte Schutzfeld einen Abschaltbefehl erzeugt oder die Gefahr auf andere Weise abwendet, etwa durch Verbringen in eine sichere Parkposition. Da von der Funktionsfähigkeit des Sensors Gesundheit und Leben von Personen abhängt, sind die Anforderungen für in der Sicherheitstechnik eingesetzte Sensoren sehr streng und normiert, beispielsweise in der EN13849 für Maschinensicherheit oder der Gerätenorm EN61496 für berührungslos wirkende Schutzeinrichtungen.

Bei bekannten Lichtgittern werden üblicherweise die Lichtstrahlen nicht im Dauerbetrieb aktiviert, sondern die Objektdetektion erfolgt mittels optischer Impulse, die durch das Schutzfeld von Sender zu Empfänger übertragen werden. Die Signalform der optischen Pulse und die Detektionsart haben Einfluss auf die Leistungsfähigkeit des Systems, denn hiervon hängen unter anderem die maximale Schutzfeldbreite, die Ansprechzeit, die Störanfälligkeit bezüglich optischer und elektrischer Störungen und die Anzahl parallel betreibbarer Systeme ab.

In einem herkömmlichen Lichtgitter werden die einzelnen Strahlen, auch als Kanäle bezeichnet, in einem Zeitmultiplexverfahren zyklisch nacheinander aktiviert. Das ist deshalb erforderlich, weil die Sendestrahlen durch ihre Divergenz zumindest bei größeren Abständen zwischen Sendern und Empfängern nicht nur den zugehörigen Empfänger, sondern auch dessen Nachbarn überstrahlen. Durch ausschließliche synchrone Aktivierung von Sender und zugehörigem Empfänger werden Fehlzuordnungen vermieden. Dabei werden einfache rechteckförmig Einzelpulse mit einer empfangsseitigen Schaltschwelle verwendet. Störsignale können so allenfalls in geringem Maße durch Filter unterdrückt werden. Der Übertragungskanal und dessen Bandbreite wird nur ineffizient genutzt, und das System bleibt störanfällig. Das Zeitmultiplexing, mit dem die Strahlen eines Systems untereinander oder Strahlen mehrerer parallel betriebener Systeme unterschieden werden, benötigt einen verhältnismäßig großen Zeitabstand zwischen den Pulsen und führt so zu einer verlangsamten Ansprechzeit.

Im Stand der Technik wird deshalb vorgeschlagen, Bandspreizverfahren oder Frequenzmultiplexing zu verwenden. Beispielsweise sendet der Sensor gemäß DE 10 2008 015 286 A1 Lichtsignale, die jeweils durch ein nach dem Bandspreizverfahren mit einem Code modulierten Ausgangssignal erzeugt sind. In der EP 2 230 538 A1 ist den Lichtsendern eines Lichtgitters jeweils eine unterschiedliche Grundmodulationsfrequenz zugewiesen, anhand derer empfangsseitig die Zuordnung zu einem Kanal vorgenommen werden kann.

Die EP 2012 144 A1 versucht das Problem, dass in einem Lichtgitter ein und derselbe Sendestrahl mehrere benachbarte Empfänger treffen kann, durch geschickte gruppenweise Anordnung zu lösen. Zudem wird die Möglichkeit angesprochen, auf den unterschiedlichen Kanälen zueinander orthogonale Pulsfolgen auszusenden, die dann durch Korrelation auseinandergehalten und den einzelnen Sendern zugeordnet werden sollen.

Die herkömmlichen Verfahren haben den Nachteil eines hohen Implementierungsaufwands. Vor allem stehen gerade für kurze Sendesignale, die bei gewünschten Ansprechzeiten erforderlich sind, zu wenige hinreichend orthogonalen Korrelationssequenzen zur Verfügung.

Aus der Nachrichtenübertragung ist das Verfahren des Orthogonal Frequency Division Multiplexing (OFDM) bekannt, das beispielsweise in der DE 100 27 301 A1 Verwendung findet. Dabei wird die Information auf eine Vielzahl zueinander orthogonaler Trägerfrequenzen verteilt. OFDM wird beispielsweise für ADSL oder DVB-T eingesetzt. Da bei den hier betrachteten Sensoren keine hohe Informationsdichte übertragen und auch keine Vielzahl von Teilnehmern bedient werden muss, ist OFDM in dem technischen Umfeld dieser Sensoren bisher nicht diskutiert worden.

Es ist daher Aufgabe der Erfindung, die Signalübertragung zwischen Sender und Empfänger eines gattungsgemäßen optoelektronischen Sensors zu verbessern.

Diese Aufgabe wird durch einen optoelektronischen Sensor gemäß Anspruch 1 sowie durch ein Verfahren zur optischen Erfassung von Objekten gemäß Anspruch 15 gelöst. Dabei geht die Erfindung von dem Grundgedanken aus, den ausgesandten Lichtstrahl mit einem Sendesignal zu modulieren und das Empfangssignal entsprechend zu demodulieren, um so festzustellen, ob sich ein Objekt in dem Lichtstrahl befindet. Als Modulationsverfahren soll erfindungsgemäß OFDM (Orthogonal Frequency Division Multiplexing) eingesetzt werden. Dabei setzt sich das Sendesignal aus mehreren Teilsendesignalen zusammen, die jeweils auf einen eigenen Träger aufmoduliert werden. Das resultierende Sendesignal wird dann durch Summierung über eine Vielzahl zueinander orthogonaler Träger synthetisiert. Empfangsseitig werden die Teilsignale durch Demodulation rekonstruiert. Daraus wird gleich mehrfach, nämlich einmal für jeden der verwendeten Träger, die Anwesenheit eines Objekts in dem Lichtstrahl geprüft.

Die Erfindung hat den Vorteil, dass die einleitend beschriebenen Nachteile bekannterweise in Sensoren eingesetzter Modulations- und Demodulationsverfahren vermieden werden. Die Signalübertragung wird störunempfindlicher sowohl gegenüber optischen Störern wie Fremdlicht oder Störsender einschließlich der Lichtquellen anderer Sensoren als auch gegen elektrische Störer (EMV). Dies ermöglicht größere Reichweiten, also im Falle von Lichtgittern einen größeren Abstand zwischen den Sendern und Empfängern und damit eine größere Schutzfeldbreite in sicherheitstechnischer Anwendung. Durch die effiziente Kanalausnutzung wird die Reaktionszeit beziehungsweise die Ansprechzeit verringert und die Anzahl parallel nutzbarer Systeme gesteigert. Dabei kann auf analoge Bauteile weitgehend verzichtet werden, so dass durch effiziente digitale Implementierung eine Langzeitstabilität sowie eine Reduktion der Herstellkosten erzielt wird.

Die Sendesteuerung ist bevorzugt dafür ausgebildet, das Sendesignal durch eine inverse Fouriertransformation zu synthetisieren. Man kann zeigen, dass das Summensignal der auf den einzelnen Trägern modulierten Einzelsignale genau dieser inversen Fouriertransformation entspricht, so dass hiermit eine gut verstandene Vorschrift verwendet werden kann. Eine Möglichkeit der schnellen, effizienten Implementierung ist die iFFT (inverse Fast Fourier Transformation).

Die Sendesteuerung ist bevorzugt dafür ausgebildet, ein vorab berechnetes Sendesignal zu verwenden. Diese vorgelagerte Berechnung kann ebenfalls auf inverser Fouriertransformation basieren. Die Sendesteuerung muss aber dafür keine Rechenkapazitäten bereitstellen, sondern verwendet direkt die vorberechneten Sendesignale, beispielsweise durch Zugriff auf eine Wertetabelle (lookup table).

Die Sendesteuerung ist bevorzugt dafür ausgebildet, dem Sendesignal für den optischen Pfad einen Gleichlichtanteil hinzuzufügen. In der Nachrichtentechnik werden üblicherweise Signale eingesetzt, die um eine Nulllinie modulieren und dementsprechend einen negativen Signalanteil haben. Da es kein negatives Licht gibt, können derartige Signale auf dem optischen Pfad nicht übertragen werden. Dies kann dadurch gelöst werden, dass das Signal auf dem optischen Pfad um einen Gleichlichtanteil angehoben wird, so dass nur noch positive Signalanteile übrig bleiben. Am Ende des optischen Pfades, also nach Empfang des Lichtstrahls, kann der Gleichlichtanteil dann wieder abgezogen werden.

Die Auswertungseinheit ist bevorzugt dafür ausgebildet, das Empfangssignal mittels Spektralanalyse zu demodulieren. Damit werden die einzelnen Träger rekonstruiert, aus denen sich das Sendesignal zusammensetzt.

Die Spektralanalyse erfolgt bevorzugt mittels Fouriertransformation. Ein beispielhafter bekannter und effizienter Algorithmus hierzu ist FFT (Fast Fourier Algorithm). Das ist also das Gegenstück zur sendeseitigen inversen Fouriertransformation, und so wird über das gesamte relevante Spektrum rekonstruiert. Alternativ kann es auch genügen, nur Frequenzbereiche zu untersuchen, die bekanntermaßen vor Aussenden des Lichtstrahls auch verwendet wurden. Dazu wird also nicht die vollständige Fouriertransformierte berechnet, sondern nur deren Anteil bei bestimmten Frequenzen, nämlich den interessierenden orthogonalen Trägerfrequenzen. Auch hierfür sind effiziente Algorithmen bekannt, etwa ein Görtzel-Algorithmus zur Analyse bestimmter Trägerfrequenzen.

Die Sendesteuerung und/oder die Auswertungseinheit ist bevorzugt auf einem digitalen Baustein implementiert, insbesondere einem ASIC, einem FPGA, einem DSP oder einem Mikroprozessor. Dadurch wird eine kompakte und kostengünstige Implementierung ermöglicht. Analoge Bauteile mit begrenzter Langlebigkeit können so ersetzt werden.

Die Auswertungseinheit ist bevorzugt dafür ausgebildet, den ausgesandten Lichtstrahl als empfangen zu erkennen, wenn das Teilsignal auf einer Mindestzahl der genutzten Träger empfangen wird. Man fordert also nicht in allen Ausführungsformen, dass die Übertragung auf dem Lichtstrahl in sämtlichen Kanälen erfolgreich war. Es wird ja, anders als in der Nachrichtentechnik, keine komplexe Information übertragen, so dass bei Fehlen einzelner Teilkanäle keine wichtige Information verloren geht. Es kommt nur darauf an, sicher zu erkennen, ob der Lichtstrahl auf ein Objekt trifft oder nicht. Dazu genügt die im Gegensatz zu einer vollständig erfolgreichen Übertragung auf allen Trägern wesentlich robustere Forderung, dass die Sendesignalanteile für einen gewissen Anteil der Träger empfangen wurden. Ein bevorzugter Spezialfall ist, wenn bei drei genutzten Trägern das Teilsignal auf zwei Trägern empfangen wird. Das ist ein guter Kompromiss zwischen einfacher Auswertung und störfester Objekterkennung. Andere besonders geeignete Kombinationen sind ein Träger aus zwei, drei Träger aus vier und ähnliche einfache, niedrige Zahlenkombinationen, wobei aber grundsätzlich auch eine wesentlich größere Anzahl denkbar ist, beispielsweise fünfundvierzig Träger aus fünfzig.

Die Sendesteuerung ist bevorzugt dafür ausgebildet, das Sendesignal mehrfach wiederholt auszusenden, wobei die Auswertungseinheit den Lichtstrahl als empfangen erkennt, wenn das Sendesignal in einer Mindestanzahl der Wiederholungen empfangen wird. Hier geht es also nicht um eine Betrachtung parallel aktiver Träger, sondern um eine sequentielle Wiederholung der gesamten Übertragung auf allen genutzten Trägern. Dennoch können analoge Forderungen aufgestellt werden, beispielsweise dass von zwei aufeinanderfolgenden Wiederholungen zumindest eine erfolgreiche Übertragung erkannt werden muss, oder zwei aus drei und ähnliches.

Bevorzugt sind in der Sendesteuerung die genutzten Träger für eine Codierung wählbar, wobei die Auswertungseinheit dafür ausgebildet ist, einen zugehörigen Lichtstrahl anhand der verwendeten Trägerfrequenzen zu erkennen. In realen Anwendungen für optoelektronische Sensoren stehen meist wesentlich mehr potentielle Trägerfrequenzen zur Verfügung als gebraucht werden. Daher kann durch Permutationen, welche von diesen Trägerfrequenzen tatsächlich genutzt werden, eine große Anzahl von Codierungen generiert werden, die für einen bestimmten Sendestrahl oder einen bestimmten Sensor stehen. Dies ermöglicht eindeutige Zuordnungen von empfangenen Signalen zu bestimmten Sendern.

Die Auswertungseinheit ist bevorzugt dafür ausgebildet, Störer in dem Empfangsbereich des Lichtempfängers zu erkennen, und daraufhin Trägerfrequenzen auszuwählen, mit denen den Störern ausgewichen wird und/oder Amplituden zu wählen, mit denen sich die Teilsignale gegenüber den Störern durchsetzen. So wird eine einfache Adaptivität durch Anpassung der einzelnen Trägersignale an den Übertragungskanal beziehungsweise die vorhandenen Störsignale ermöglicht.

Der Sensor ist bevorzugt als Lichtschranke, Lichttaster oder Scanner ausgebildet. Diese Sensoren wurden einleitend kurz vorgestellt. Bei Lichtschranken wird im Normalzustand erwartet, dass der Lichtstrahl empfangen wird, und das Objekt wird anhand einer Strahlunterbrechung erkannt. Das Tasterprinzip funktioniert gerade umgekehrt, hier strahlt der Sensor frei in den Raum und erkennt ein Objekt daran, dass der Sendelichtstrahl reflektiert wird, wenn er auf ein Objekt trifft. Tastende Systeme können so weiterentwickelt werden, dass die Lichtlaufzeit zwischen Aussenden und Empfangen des Lichts bestimmt wird, um daraus mittels der bekannten Lichtgeschwindigkeit den Objektabstand zu messen.

Der Sensor ist noch bevorzugter als Lichtgitter ausgebildet, indem eine Vielzahl von Lichtsendern und Lichtempfängern vorgesehen ist, die jeweils paarweise einen Lichtstrahl aussenden und empfangen. In der Sicherheitstechnik spannt ein solches Lichtgitter mit seinen Strahlen ein Schutzfeld auf, in das nicht eingegriffen werden darf. Andernfalls wird ein sicherheitsgerichtetes Abschaltsignal an eine überwachte Gefahrenquelle ausgegeben. Lichtgitter können wie einstrahlige Systeme auch tastend ausgebildet werden.

In vorteilhafter Weiterbildung sind mehrere Lichtstrahlen gleichzeitig aktiv, die in der Auswertungseinheit anhand der Verwendung unterschiedlicher Träger voneinander unterschieden werden. Anstelle des herkömmlichen Zeitmultiplexings, bei dem die einzelnen Strahlen zyklisch nacheinander aktiviert werden, können hier also die Kanäle gruppenweise parallel aktiviert werden, um die Ansprechzeit um einen Faktor zu verkürzen, welcher der Gruppengröße entspricht. Die Kanaltrennung innerhalb der Gruppe erfolgt anhand der verwendeten Träger.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Schnittdarstellung durch ein Lichtgitter;
- Fig. 2a: eine Blockdarstellung einer Sendeeinheit für ein Lichtgitter mit einem auf mehreren orthogonalen Trägern verteilt übertragenen Sendesignal;
- Fig. 2b: eine Blockdarstellung eines zu der Sendeeinheit gemäß Figur 2a gehörigen Empfängereinheit für ein Lichtgitter;
- Fig. 3a: eine Blockdarstellung einer Sendeeinheit für ein Lichtgitter in einer weiteren Ausführungsform, bei dem mehrere Sender gleichzeitig in einem Gruppenmultiplexing aktiviert werden können; und
- Fig. 3b: eine Blockdarstellung einer zu der Sendeeinheit gemäß Figur 3a gehörigen Empfängereinheit für das Lichtgitter in der weiteren Ausführungsform.

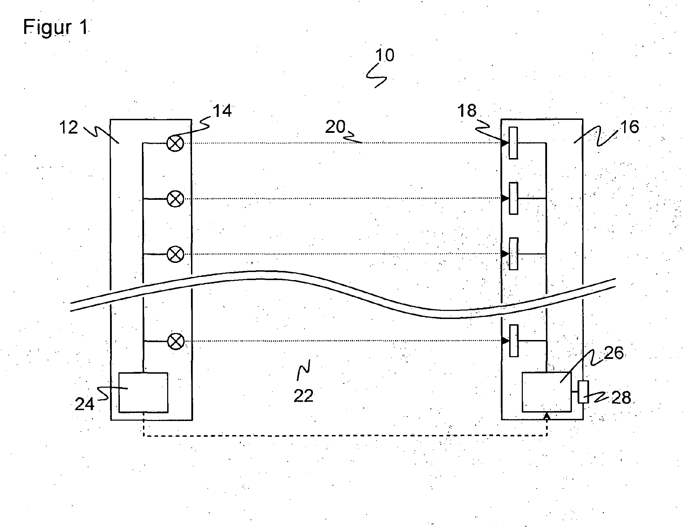

Figur 1 zeigt eine vereinfachte Schnittdarstellung durch ein Lichtgitter 10. Die Erfindung wird am Beispiel eines Lichtgitters erläutert, ist aber ebenso bei den anderen einleitend genannten optoelektronischen Sensoren einsetzbar. Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Von den Lichtsendern 14 wird jeweils ein Lichtstrahl 20 zu einem zugeordneten Lichtempfänger 18 ausgesandt. Somit spannt das Lichtgitter 10 eine Vielzahl von Lichtstrahlen 20 oder Kanälen auf, um Objekte in einem Überwachungsbereich 22 zwischen der Sendeeinheit 12 und der Empfangseinheit 16 zu erkennen. Dabei kann den Lichtsendern 14 und den Lichtempfängern 18 abweichend von der Darstellung eine Optik samt Blenden oder dergleichen zugeordnet sein, um den Lichtstrahl 20 zu formen beziehungsweise gezielt und nur innerhalb einer bestimmten Empfangskeule auf einen Lichtempfänger 18 zu lenken.

In der Sendeeinheit 12 ist eine Sendesteuerung 24 direkt oder mittelbar mit allen Lichtsendern 14 verbunden, um deren Aktivität zu steuern und sie dazu zu veranlassen, bestimmte Signalformen auszusenden. Als Gegenstück ist in der Empfangseinheit 16 eine Auswertungseinheit 26 vorgesehen, die direkt oder mittelbar mit allen Lichtempfängern 18 verbunden ist, um die Empfangssignale auszuwerten. Anhand der Empfangssignale erkennt die Auswertungseinheit 26, welche Lichtstrahlen 20 unterbrochen sind und welche nicht.

Für sicherheitstechnische Anwendungen ist das Lichtgitter 10 entsprechend der eingangs genannten Normen ausgebildet. Der Überwachungsbereich 22 ist in dieser Anwendung das durch die Lichtstrahlen 20 aufgespannte Schutzfeld. Erkennt die Auswertungseinheit 26 einen unzulässigen Eingriff in das Schutzfeld, so wird ein sicherheitsgerichteter Abschaltbefehl über einen sicheren Ausgang 28 (OSSD, Output Signal Switching Device) ausgegeben. Welche Eingriffe unzulässig sind, unterscheidet sich in Abhängigkeit von der Anwendung, beispielsweise kann die Unterbrechung jedes beliebigen Lichtstrahls genügen, oder es werden bestimmte Unterbrechungsmuster für zulässige Objekte eingelernt, die dann ausnahmsweise nicht zu einer Abschaltung führen.

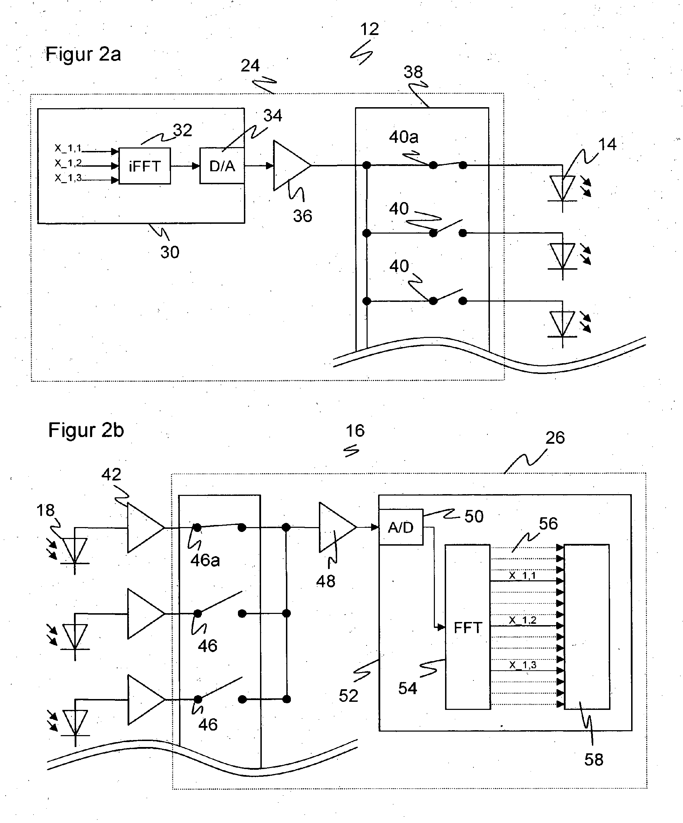

Figur 2 illustriert ein Modulationsverfahren, das in einer Ausführungsform der Erfindung eingesetzt wird. Dabei zeigt Figur 2a einen Ausschnitt der Sendeeinheit 12 und Figur 2b einen Ausschnitt der zugehörigen Empfangseinheit 16. In der gesamten Beschreibung bezeichnen gleiche Bezugszeichen die gleichen Merkmale.

Das Modulationsverfahren ist an das OFDM (Orthogonal Frequency Division Multiplexing) angelehnt, das bisher nur in der Nachrichtentechnik angewandt wird. Dabei werden zeit- und wertkontinuierliche Pulse sequenziell ausgesandt, die sich aus orthogonalen schmalbandigen Trägersignalen additiv zusammensetzen.

Die Signalsynthese erfolgt in der Sendesteuerung 24 vorzugsweise in einem digitalen Baustein 30, wie einem Mikrocontroller oder einem DSP. Das Sendesignal ist im Gegensatz zu Anwendungen der Nachrichtentechnik sehr einfach, weil keine komplexe Information übertragen werden muss. Im Grunde genügt die binäre Information, ob der Lichtstrahl empfangen wird oder nicht. Hinzu kommt lediglich noch eine Codierung, damit empfangseitig eine Zuordnung zu einem bestimmten Sensor 10 oder einem bestimmten Lichtstrahl 20 ermöglicht ist.

Entsprechend dem OFDM wird das Sendesignal auf eine Vielzahl von zueinander orthogonalen Trägern verteilt, besteht also aus mehreren Teilsignalen X_1,1, X_1,2, X_1,3. Anstelle der beispielhaft verwendeten drei Träger kann eine andere, insbesondere eine wesentlich höhere Anzahl genutzt werden. Die Teilsignale selbst können nach Festlegung des zugehörigen Trägers über ihre Phase und Amplitude weitere Informationen enthalten, um eine Strahlcodierung vorzunehmen.

Um aus den mehreren Teilsignalen auf verschiedenen Trägerfrequenzen eine zeitabhängige Modulationsvorschrift für den Lichtstrahl 20 zu gewinnen, werden die Teilsignale über eine inverse Fouriertransformation additiv verknüpft. Eine effiziente Implementierung ist die inverse Fast Fourier Transformation, die in einem Block iFFT 32 des digitalen Bausteins 32 berechnet wird. Da keine dynamische Information zu übertragen ist, sondern nur ein binäres An/Aus-Signal beziehungsweise eine vorab wählbare Strahlcodierung, kann die iFFT auch vor dem eigentlichen Betrieb berechnet und in einer Wertetabelle abgelegt werden. Sofern diese Berechnung extern erfolgt, wird nicht nur Rechenzeit eingespart, sondern es genügt ein äußerst einfacher digitaler Baustein 30, der lediglich noch die Wertetabelle auslesen muss.

Da Licht keine negativen Signalanteile haben kann, wird zusätzlich für den optischen Pfad noch ein Gleichlichtanteil aufaddiert, der bei Empfang wieder abgezogen wird. Das derart synthetisierte Signal wird über einen D/A-Wandler 34 auf eine spannungsgesteuerte Stromquelle 36 gegeben, deren Ausgangsstrom dann durch die Sendediode des jeweils angesteuerten Lichtsenders 14 fließt. Dabei wird der jeweils zu aktivierende Lichtsender 14 in einer Flip-Flop-Kette oder Schaltermatrix 38 ausgewählt. Darin ist für die einleitend beschriebene sequentielle Aktivierung der Lichtsender 14 während eines Aktivierungszyklus' jeweils nur ein Schalter 40a geschlossen, während die übrigen Schalter 40 geöffnet bleiben. So wird verhindert, dass ein benachbarter Lichtempfänger 18 einen Lichtstrahl 20 empfängt, der nicht von dem zugehörigen Lichtsender 14 stammt.

Bei Auftreffen des Lichtstrahls 20 auf der Empfangseinheit 16 wird das optische Empfangssignal von der entsprechenden Photodiode des Lichtempfängers 18 detektiert. Das von dem Lichtempfänger 18 erzeugte elektrische Empfangssignal wird konditioniert, beispielsweise durch einen Verstärker 42 beziehungsweise durch Filter. Eine empfangsseitige Flip-Flop-Kette oder Schaltermatrix 44 selektiert durch einen Schalter 46a den jeweils der Sequenz des Aktivierungszyklus' entsprechenden Lichtempfänger 18, während die übrigen Schalter 46 geöffnet bleiben. Dazu sind Sendeeinheit 12 und Empfangseinheit 16 aufeinander elektrisch oder optisch synchronisiert, damit bekannt ist, welcher Kanal oder Lichtstrahl 20 aktuell aktiv ist.

Das derart selektierte Ausgangssignal kann in einem weiteren Analogbaustein 48 weiter konditioniert werden und wird dann über einen A/D-Wandler 50 einem empfangsseitigen digitalen Baustein 52 zur eigentlichen Auswertung zugeführt. Die geeignete Demodulation für den eingehenden sequentiellen Datenstrom ist in Umkehrung der sendeseitigen inversen Fouriertransformation eine Fouriertransformation, die in dem Ausführungsbeispiel in einem Block FFT 54 als Fast Fourier Transformation FFT implementiert ist. Damit werden die einzelnen orthogonalen Träger rekonstruiert, wie durch Pfeile 56 illustriert. Da das Sendesignal nicht alle verfügbaren Träger ausgenutzt hat, finden sich die Teilsignale X_1,1, X_1,2, X_1,3 nur auf einigen der Pfeile 56.

In einer Logikeinheit 58 werden anschließend die zu den jeweiligen Trägersignalen gehörigen Spektralkomponenten nach Betrag und Phase ausgewertet. Damit wird festgestellt, ob die Teilsignale den erwarteten Teilsignalen des zugehörigen Lichtsenders 14 entsprechen. Dabei ist nicht notwendig, die starke Forderung aufzustellen, dass das Sendesignal auf allen Trägern korrekt übertragen wurde. Es genügt beispielsweise zu fordern, dass zwei von drei Trägern als gültig detektiert werden. Je mehr Trägerfrequenzen pro Lichtstrahl 20 verwendet werden, desto störunempfindlicher wird die Signalübertragung, besonders gegenüber schmalbandigen Störern, die nämlich allenfalls einen oder einige Träger betreffen. Es ist sogar denkbar, die Signalübertragung adaptiv auszuführen. Dabei werden vorhandene Störquellen ausgemessen, beispielsweise indem die Lichtempfänger aktiviert werden, und anschließend werden die verwendeten Träger oder die Signalamplituden auf den jeweiligen Trägern an die vorhandenen Störsignale angepasst.

Es ist empfangsseitig nicht zwingend erforderlich, eine vollständige Fouriertransformation zu berechnen. Da die von dem Sensor 10 verwendeten Träger bekannt sind, genügt es, gezielt nur Werte der Fouriertransformierten bei den betroffenen Frequenzen zu berechnen. Auch hierfür sind effiziente Verfahren bekannt, beispielsweise der Görtzel-Algorithmus.

Um eine noch robustere Objekterkennung zu erreichen, kann das Sendesignal mehrfach hintereinander wiederholt übertragen werden. Danach wird beispielsweise gefordert, dass von zwei Wiederholungen zumindest bei einer der Wiederholungen der Lichtstrahl 20 als empfangen erkannt sein muss. Andernfalls wird der Lichtstrahl 20 als unterbrochen angesehen. Damit werden beispielsweise ganz kurzzeitige aber massive Störungen von tatsächlichen Objekteingriffen unterschieden.

Wie in Figur 2b zu erkennen, werden nicht unbedingt alle verfügbaren Träger von jedem Lichtstrahl 20 genutzt. Dies kann für eine zusätzliche individuelle Strahlcodierung verwendet werden, bei der die jeweilige Permutation der genutzten Träger innerhalb der verfügbaren Träger als Charakteristikum für einen bestimmten Lichtstrahl 20 dient. Dies wird in einer einfachen, sehr regelmäßigen Aufteilung im folgenden Ausführungsbeispiel genutzt. Es stehen aber noch weitaus mehr Permutationen zur Verfügung, wenn man bedenkt, dass in der Nachrichtentechnik eine Größenordnung von fünfzig orthogonalen Trägern verwendet wird.

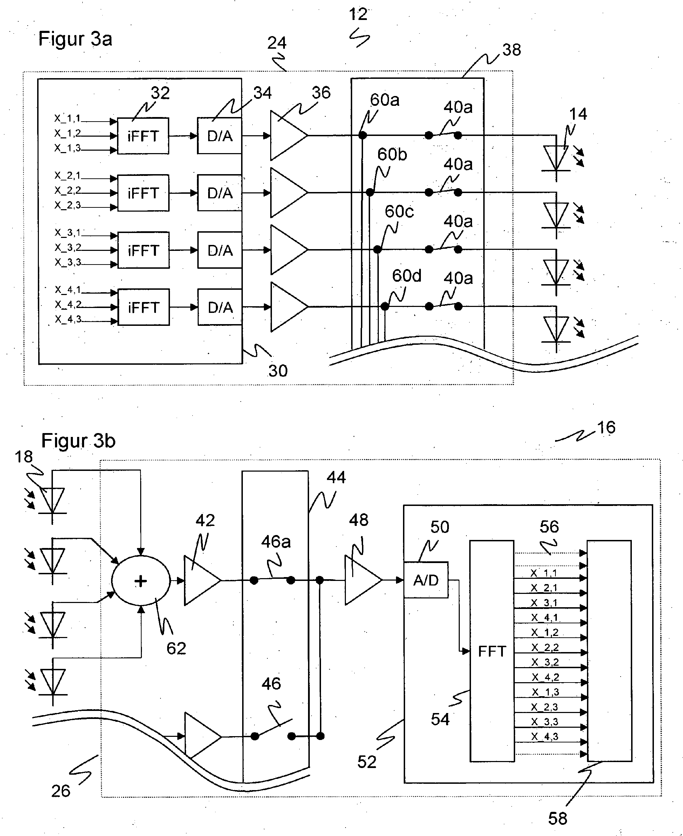

Figur 3 zeigt in Figur 3a die Sendeeinheit 12 und in Figur 3b die Empfangseinheit 16 einer weiteren Ausführungsform, bei der die Lichtstrahlen 20 nicht mehr rein sequentiell durchgeschaltet werden, sondern mehrere Lichtstrahlen 20 gleichzeitig aktiv sind. Dieses parallele Senden und Empfangen ist durch bessere Ausnutzung der vorhandenen Bandbreite aufgrund der Orthogonalität der Signale möglich und führt zu einer vereinfachten Beschaltung der Lichtempfänger sowie einer Verkürzung der Ansprechzeit des Sensors 10.

Im Unterschied zu der anhand Figur 2 beschriebenen Ausführungsform werden in der Ausführungsform gemäß Figur 3 mehrere Kanäle zusammengefasst, die parallel aktiv sind. In dem Beispiel der Figur 3 sind vier Kanäle parallel aktiv, wobei diese Anzahl rein beispielhaft zu verstehen ist. Der Aktivierungszyklus wird also verkürzt, und es entsteht ein Mehrstrahl-Multiplexing anstelle des sonst üblichen Einzelstrahl-Multiplexings.

Der digitale Baustein 30 der Sendesteuerung 24 umfasst dafür jeweils vier Blöcke 32 für die inverse Fast Fourier Transformation iFFT, um auf jeweils drei Trägern die Signalsynthese für jeweils einen Lichtstrahl 20 vorzunehmen. Insgesamt werden somit zwölf orthogonale Träger in vier Blöcken je drei Trägern verwendet. In der Schaltermatrix 38 sind vier Schalter zugleich geschlossen, um die entsprechenden vier Lichtsender 14 mit ihrem modulierten Strom zu versorgen. Unterhalb der gebrochenen Linie in Figur 3a, welche die Fortsetzung des Lichtgitters 10 andeutet, befinden sich weitere Lichtsender 14 und Schalter 40, die jeweils Vierergruppen bilden, von denen jeder Lichtsender 14 von einem anderen der Abzweigungspunkte 60a-d mit einem eigenen der vier Blöcke aus drei Trägern versorgt wird, wenn die Schalter entsprechend des Mehrstrahl-Multiplexings eine andere Vierergruppe ansteuern.

Wie in Figur 3b dargestellt, werden auch empfangsseitig jeweils vier Lichtempfänger 18 zusammengefasst und deren Signal in einem Addierer 62 aufsummiert. Die Schaltermatrix 44 sieht nur noch einen Schalter 46, 46a je Vierergruppe von Lichtempfängern 18 vor, um das Mehrstrahl-Multiplexing umsetzen zu können. Bei der Fouriertransformtion im Block FFT 54 werden die Teilsignale wegen deren Orthogonalität auf allen Trägern rekonstruiert. Die Logikeinheit 58 kann deshalb trotz der Zusammenfassung der Empfangssignale in dem Addierer 62 die Teilsignale den einzelnen Lichtsendern 14 zuordnen.

Obwohl die Viergruppen in Figur 3 als benachbarte Lichtsender 14 und Lichtempfänger 18 dargestellt sind, kann es sinnvoll sein, Gruppen aus weiter voneinander beabstandeten Lichtstrahlen 20 zu bilden. Beispielsweise besteht eine Gruppe aus dem ersten, fünften, neunten und dreizehnten Lichtstrahl 20 und die nächsten Gruppen jeweils aus den nachfolgenden Lichtstrahlen 20 der vorherigen Gruppe, wobei sich das Zuordnungssystem nach vier Gruppen ab dem siebzehnten Strahl analog wiederholt. Nahezu beliebige andere Gruppen sind denkbar. Der Vorteil, dass nicht direkt benachbarte Lichtstrahlen 20 in einer Gruppe zusammengefasst sind, liegt darin, dass nicht versehentlich ein Lichtempfänger 18 das Signal eines ihm nicht zugeordneten Lichtsenders 14 empfängt. Das könnte dann wegen der Summierung in dem Addierer 62 nicht mehr eindeutig zugeordnet werden. Alternativ zu einer gemischten Gruppenbildung wie beschrieben könnte auch die Fouriertransformation vorverlagert werden, also auf den Signalen einzelner Lichtempfänger 18 vor deren Aufaddieren über mehrere Lichtempfänger 18 durchgeführt werden. Das erfordert deutlich mehr Auswertungskapazitäten, ermöglicht dann aber, die Parallelität soweit zu erhöhen, wie orthogonale Träger zur Verfügung stehen.

Die weiteren Ausgestaltungen der Ausführungsform gemäß Figur 2 sind auch in der Ausführungsform gemäß Figur 3 möglich. So kann beispielsweise der mehrfache Block iFFT 32 durch Wertetabellen ersetzt werden, eine Strahlcodierung über die verwendeten Träger erfolgen oder die Signalübertragung durch Wiederholung noch robuster gestaltet werden.

Eine Voraussetzung dafür, dass die Orthogonalität der Teilsignale gewahrt bleibt, ist die Synchronizität. Es ist also vorteilhafterweise darauf zu achten, dass der Sensor 10 sein Sende- und Empfangsverhalten synchronisiert. Soweit die Anwendung das zulässt, ist es auch vorteilhaft, wenn parallel betriebene Systeme untereinander synchronisiert sind.

## Patentansprüche

1. Optoelektronischer Sensor (10) mit einem Lichtsender (14) zum Aussenden eines Lichtstrahls (20), einem Lichtempfänger (18) zum Umwandeln des empfangenen Lichtstrahls (20) in ein elektrisches Empfangssignal, einer Sendesteuerung (24) zum Aufmodulieren eines Sendesignals auf den ausgesandten Lichtstrahl (20) und einer Auswertungseinheit (26), die dafür ausgebildet ist, das Empfangssignal zu demodulieren und daraufhin festzustellen, ob sich ein Objekt in dem Lichtstrahl (20) befindet,
**dadurch gekennzeichnet,**
**dass** das Sendesignal durch Summierung mehrerer Teilsignale gebildet ist, die jeweils einem Teilsendesignal entsprechen, das auf einen aus einer Vielzahl zueinander orthogonaler Träger aufmoduliert ist, und wobei die Auswertungseinheit (26) dafür ausgebildet ist, nach der Demodulation für jedes Teilsignal in den dessen Träger entsprechenden Frequenzanteilen zu prüfen, ob der ausgesandte Lichtstrahl empfangen wird oder nicht.

2. Sensor (10) nach Anspruch 1,
wobei die Sendesteuerung (24) dafür ausgebildet ist, das Sendesignal durch eine inverse Fouriertransformation zu synthetisieren, insbesondere mittels iFFT.

3. Sensor (10) nach Anspruch 1,
wobei die Sendesteuerung (24) dafür ausgebildet ist, ein vorab berechnetes Sendesignal zu verwenden, insbesondere mit Hilfe einer Wertetabelle.

4. Sensor (10) nach einem der vorhergehenden Ansprüche,
wobei die Sendesteuerung (24) dafür ausgebildet ist, dem Sendesignal für den optischen Pfad einen Gleichlichtanteil hinzuzufügen.

5. Sensor (10) nach einem der vorhergehenden Ansprüche,
wobei die Auswertungseinheit (26) dafür ausgebildet ist, das Empfangssignal mittels Spektralanalyse zu demodulieren.

6. Sensor (10) nach Anspruch 5,
wobei die Spektralanalyse mittels Fouriertransformation, insbesondere FFT zur Rekonstruktion über das gesamte relevante Spektrum oder mittels eines Görtzel-Algorithmus' zur Analyse bestimmter Trägerfrequenzen erfolgt.

7. Sensor (10) nach einem der vorhergehenden Ansprüche,
wobei die Sendesteuerung (24) und/oder die Auswertungseinheit (26) auf einem digitalen Baustein (30, 52) implementiert ist, insbesondere einem ASIC, einem FPGA, einem DSP oder einem Mikroprozessor.

8. Sensor (10) nach einem der vorhergehenden Ansprüche,
wobei die Auswertungseinheit (26) dafür ausgebildet ist, den ausgesandten Lichtstrahl (20) als empfangen zu erkennen, wenn das Teilsignal auf einer Mindestzahl der genutzten Träger empfangen wird, insbesondere wenn bei drei genutzten Trägern das Teilsignal auf zwei Trägern empfangen wird.

9. Sensor (10) nach einem der vorhergehenden Ansprüche,
wobei die Sendesteuerung (24) dafür ausgebildet ist, das Sendesignal mehrfach wiederholt auszusenden, und wobei die Auswertungseinheit (26) den Lichtstrahl (20) als empfangen erkennt, wenn das Sendesignal in einer Mindestanzahl der Wiederholungen empfangen wird.

10. Sensor (10) nach einem der vorhergehenden Ansprüche,
wobei in der Sendesteuerung (24) die genutzten Träger für eine Codierung wählbar sind, und wobei die Auswertungseinheit (26) dafür ausgebildet ist, einen zugehörigen Lichtstrahl (20) anhand der verwendeten Trägerfrequenzen zu erkennen.

11. Sensor (10) nach einem der vorhergehenden Ansprüche,
wobei die Auswertungseinheit (26) dafür ausgebildet ist, Störer in dem Empfangsbereich des Lichtempfängers (18) zu erkennen, und daraufhin Trägerfrequenzen auszuwählen, mit denen den Störern ausgewichen wird und/oder Amplituden zu wählen, mit denen sich die Teilsignale gegenüber den Störern durchsetzen.

12. Sensor (10) nach einem der vorhergehenden Ansprüche,
der als Lichtschranke, Lichttaster oder Scanner ausgebildet ist.

13. Sensor (10) nach einem der vorhergehenden Ansprüche,
der als Lichtgitter ausgebildet ist, indem eine Vielzahl von Lichtsendern (14) und Lichtempfängern (18) vorgesehen ist, die jeweils paarweise einen Lichtstrahl (20) aussenden und empfangen.

14. Sensor (10) nach einem der vorhergehenden Ansprüche,
wobei mehrere Lichtstrahlen (20) gleichzeitig aktiv sind, die in der Auswertungseinheit (26) anhand der Verwendung unterschiedlicher Träger voneinander unterschieden werden.

15. Verfahren zur optischen Erfassung von Objekten, bei dem ein Lichtstrahl (20) ausgesandt und empfangen wird, wobei dem ausgesandten Lichtstrahl (20) ein Sendesignal aufmoduliert und ein aus dem empfangenen Lichtstrahl (20) erzeugtes elektrisches Empfangssignal demoduliert wird, um daraufhin festzustellen, ob sich ein Objekt in dem Lichtstrahl (20) befindet,
**dadurch gekennzeichnet,**
**dass** das Sendesignal durch Summierung mehrerer Teilsignale gebildet ist, die jeweils einem Teilsendesignal entsprechen, das auf einen aus einer Vielzahl zueinander orthogonaler Träger aufmoduliert ist, und dass empfangsseitig nach der Demodulation für jedes Teilsignal in den dessen Träger entsprechenden Frequenzanteilen geprüft wird, ob der ausgesandte Lichtstrahl (20) empfangen wird oder nicht.

## Claims

1. An optoelectronic sensor (10) having a light transmitter (14) for transmitting a light beam (20), having a light receiver (18) for converting the received light beam (20) into an electrical received signal, having a transmission control (24) for modulating a transmitted signal onto the transmitted light beam (20) and having an evaluation unit (26) which is configured to demodulate the received signal and thereupon to determine whether an object is located in the light beam (20),
**characterised in that**
the transmitted signal is formed by summing a plurality of partial signals which each correspond to a partial transmitted signal which is modulated onto one of a plurality of mutually orthogonal carriers; and wherein the evaluation unit (26) is configured to check whether the transmitted light beam is being received or not after the demodulation for each partial signal in the frequency portions corresponding to its carrier.

2. A sensor (10) in accordance with claim 1,
wherein the transmission control (24) is configured to synthesise the transmitted signal by an inverse Fourier transformation, in particular by means of IFFT.

3. A sensor (10) in accordance with claim 1,
wherein the transmission control (24) is configured to use a previously calculated transmission signal, in particular with the aid of a value table.

4. A sensor (10) in accordance with any one of the preceding claims,
wherein the transmission control (24) is configured to add a constant light portion to the transmitted signal for the optical path.

5. A sensor (10) in accordance with any one of the preceding claims,
wherein the evaluation unit (26) is configured to demodulate the received signal by means of spectral analysis.

6. A sensor (10) in accordance with claim 5,
wherein the spectral analysis takes place by means of Fourier transformation, in particular by FTT for the reconstruction over the total relevant spectrum or by means of a Goertzel algorithm for the analysis of specific carrier frequencies.

7. A sensor (10) in accordance with any one of the preceding claims,
wherein the transmission control (24) and/or the evaluation unit (26) is/are implemented on a digital component (30, 52), in particular on an ASIC, an FPGA, a DSP or a microprocessor.

8. A sensor (10) in accordance with any one of the preceding claims,
wherein the evaluation unit (26) is configured to recognise the transmitted light beam (20) as received when the partial signal is received on a minimum number of the utilised carriers, in particular when the partial signal is received on two carriers with three utilised carriers.

9. A sensor (10) in accordance with any one of the preceding claims,
wherein the transmission control (24) is configured to transmit the transmitted signal repeatedly a multiple of times; and wherein the evaluation unit (26) recognises the light beam (20) as received when the transmitted signal is received in a plurality of the repetitions.

10. A sensor (10) in accordance with any one of the preceding claims,
wherein the utilised carriers are selectable for an encoding in the transmission control (24); and wherein the evaluation unit (26) is configured to recognise an associated light beam (20) with reference to the utilised carrier frequencies.

11. A sensor (10) in accordance with any one of the preceding claims,
wherein the evaluation unit (26) is configured to recognize disrupters in the reception region of the light receiver (18) and thereupon to select carrier frequencies with which the disrupters are evaded and/or to select amplitudes at which the partial signals prevail with respect to the disrupters.

12. A sensor (10) in accordance with any one of the preceding claims, which is configured as a light barrier, a light sensor or a scanner.

13. A sensor (10) in accordance with any one of the preceding claims, which is configured as a light grid in that a plurality of light transmitters (14) and light transmitters (18) are provided which each transmit and receive a light beam (20) in pairs.

14. A sensor (10) in accordance with any one of the preceding claims,
wherein a plurality of light beams (20) are simultaneously active which are distinguished from one another in the evaluation unit (26) with reference to the use of different carriers.

15. A method for the optical detection of objects, in which a light beam (20) is transmitted and received, wherein a transmitted signal is modulated on the transmitted light beam (20) and an electrical received signal generated from the received light beam (20) is demodulated in order thereupon to determine whether an object is located in the light beam (20), **characterised in that**
the transmitted signal is formed by summing a plurality of partial signals which each correspond to a partial transmitted signal which is modulated onto one of a plurality of mutually orthogonal carriers; and **in that** a check is made at the reception side whether the transmitted light beam (20) is being received or not after the demodulation for each partial signal in the frequency portions corresponding to its carrier.

## Revendications

1. Capteur optoélectronique (10) comprenant un émetteur de lumière (14) pour émettre un rayon de lumière (20), un récepteur de lumière (18) pour convertir le rayon de lumière reçue (20) en un signal de réception électrique, une commande d'émission (24) pour moduler un signal d'émission en superposition sur le rayon de lumière émis (20) et une unité d'évaluation (26), qui est réalisée pour démoduler le signal de réception et constater ensuite si un objet se trouve dans le rayon de lumière (20),
**caractérisé en ce que**
le signal d'émission est formé par sommation de plusieurs signaux partiels, qui correspondent chacun à un signal d'émission partiel qui est modulé en superposition sur une porteuse parmi une pluralité de porteuses mutuellement orthogonales, et dans lequel l'unité d'évaluation (26) est réalisée pour vérifier, après la démodulation pour chaque signal partiel dans les parts de fréquence correspondant à sa porteuse, si le rayon de lumière émis est reçu ou non.

2. Capteur (10) selon la revendication 1,
dans lequel la commande d'émission (24) est réalisée pour synthétiser le signal d'émission par une transformation de Fourier inverse, en particulier au moyen d'une transformation iFFT.

3. Capteur (10) selon la revendication 1,
dans lequel la commande d'émission (24) est réalisée pour utiliser un signal d'émission préalablement calculé, en particulier avec l'aide d'un tableau de valeurs.

4. Capteur (10) selon l'une des revendications précédentes,
dans lequel la commande d'émission (24) est réalisée pour ajouter au signal d'émission pour le trajet optique une part de lumière constante.

5. Capteur (10) selon l'une des revendications précédentes,
dans lequel l'unité d'évaluation (26) est réalisée pour démoduler le signal de réception au moyen d'une analyse spectrale.

6. Capteur (10) selon la revendication 5,
dans lequel l'analyse spectrale a lieu au moyen d'une transformation de Fourier, en particulier FFT pour la reconstruction sur la totalité du spectre pertinent ou bien au moyen d'un algorithme de Görtzel pour l'analyse de fréquences porteuses déterminées.

7. Capteur (10) selon l'une des revendications précédentes,
dans lequel la commande d'émission (24) et/ou l'unité d'évaluation (26) est mise en oeuvre sur un composant numérique (30, 52), en particulier un ASIC, un FPGA, un DSP, ou un microprocesseur.

8. Capteur (10) selon l'une des revendications précédentes,
dans lequel l'unité d'évaluation (26) est réalisée pour reconnaître que le rayon de lumière émis (20) est reçu quand le signal partiel est reçu sur un nombre minimum des porteuses utilisées, en particulier quand le signal partiel est reçu sur deux porteuses lorsqu'on utilise trois porteuses.

9. Capteur (10) selon l'une des revendications précédentes,
dans lequel la commande d'émission (24) est réalisée pour émettre le signal d'émission plusieurs fois et à répétition, et dans lequel l'unité d'évaluation (26) reconnaît que le rayon de lumière (20) est reçu quand le signal d'émission est reçu dans un nombre minimum des répétitions.

10. Capteur (10) selon l'une des revendications précédentes,
dans lequel dans la commande d'émission (24) les porteuses utilisées pour un codage peuvent être sélectionnées, et dans lequel l'unité d'évaluation (26) est réalisée pour reconnaître un rayon de lumière associé (20) au moyen des fréquences porteuses utilisées.

11. Capteur (10) selon l'une des revendications précédentes,
dans lequel l'unité d'évaluation (26) est réalisée pour reconnaître des parasites dans la plage de réception du récepteur de lumière (18), et pour sélectionner ensuite des fréquences porteuses au moyen desquelles on évite les parasites et/ou pour sélectionner des amplitudes avec lesquelles les signaux partiels s'imposent par rapport aux parasites.

12. Capteur (10) selon l'une des revendications précédentes,
qui est réalisé sous forme de barrière lumineuse, de palpeur lumineux ou de scanner.

13. Capteur (10) selon l'une des revendications précédentes, qui est réalisé sous forme de grille lumineuse, en prévoyant une pluralité d'émetteurs de lumière (14) et de récepteurs de lumière (18) qui émettent et qui reçoivent respectivement par paires un rayon de lumière (20).

14. Capteur (10) selon l'une des revendications précédentes,
dans lequel plusieurs rayons de lumière (20) sont simultanément actifs, qui sont distingués les uns des autres dans l'unité d'évaluation (26) grâce à l'utilisation de porteuses différentes.

15. Procédé pour la reconnaissance optique d'objets, dans lequel on émet un rayon de lumière (20) et on le reçoit, dans lequel on module un signal d'émission en superposition sur le rayon de lumière (20) et on démodule un signal de réception électrique engendré à partir du rayon de lumière reçue (20), pour constater ensuite si un objet se trouve dans le rayon de lumière (20),
**caractérisé en ce que**
le signal d'émission est formé par sommation de plusieurs signaux partiels qui correspondent chacun à un signal d'émission partiel, qui est modulé par superposition sur une porteuse parmi une pluralité de porteuses mutuellement orthogonales, et **en ce que** l'on vérifie à la réception, après la démodulation et pour chaque signal partiel dans les parts de fréquence correspondant à sa porteuse, si le rayon de lumière émis (20) est reçu ou non.
